(19) Europäisches Patentamt
European Patent Office
Office européen des brevets

(11) Veröffentlichungsnummer: **0 086 893**
**B1**

# (12) EUROPÄISCHE PATENTSCHRIFT

(45) Veröffentlichungstag der Patentschrift: **04.12.85**

(51) Int. Cl.⁴: **C 09 D 5/44**, C 09 D 3/48, C 25 D 13/06

(21) Anmeldenummer: **82111786.8**

(22) Anmeldetag: **18.12.82**

## (54) Selbstvernetzende kataphoretische amidgruppenhaltige Aminoharnstoffharze mit gegebenenfalls Urethangruppierungen.

(30) Priorität: **20.01.82 DE 3201565**

(43) Veröffentlichungstag der Anmeldung: **31.08.83 Patentblatt 83/35**

(45) Bekanntmachung des Hinweises auf die Patenterteilung: **04.12.85 Patentblatt 85/49**

(84) Benannte Vertragsstaaten: **AT BE DE FR GB IT NL SE**

(56) Entgegenhaltungen:
**EP-A-0 010 766**
**DE-A-3 004 538**
**US-A-2 450 940**

(73) Patentinhaber: **Akzo GmbH, Postfach 10 01 49 Kasinostrasse 19-23, D-5600 Wuppertal-1 (DE)**

(72) Erfinder: **Kersten, Hilde, Dr., Mainhauserstrasse 18, D-8765 Erlenbach (DE)**
Erfinder: **Mägerlein, Helmut, Dr., Blumenstrasse 40, D-8753 Obernburg (DE)**

**EP 0 086 893 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft selbstvernetzende kataphoretische amidgruppenhaltige Aminoharnstoffharze mit gegebenenfalls Urethangruppierungen und deren Verwendung zur kathodischen elektrischen Beschichtung von elektrisch leitenden Gegenständen.

Die kathodische elektrische Beschichtung wird bekanntlich seit einiger Zeit in industriellem Maßstab durchgeführt und erfolgt im Prinzip so, daß ein elektrisch leitender Gegenstand in eine wäßrige Dispersion eines kationischen polymeren Materials eingetaucht wird. Der zwischen dem elektrisch leitenden und als Kathode fungierenden Gegenstand und der Anode als Gegenelektrode durch die Dispersion geleitete Strom bewirkt die Abscheidung auf der Kathode.

Die bisher in der Technik bekannten, an der Kathode elektrisch abscheidbaren Harze erfüllen ihren Zweck insofern noch nicht optimal, als die mit ihnen erzielbaren Schichtdicken noch gering, die erforderlichen Härtungstemperaturen noch relativ hoch ($\geqq 170°$) und die Emission beim Einbrennen der Überzugsmittel infolge Abspaltung von Polyisocyanat-Blockierungsmitteln ziemlich beträchtlich sind. Ein Beispiel hierfür stellen die in der DE-OS 3 004 538 beschriebenen Harze dar, die aus definierten basischen Polyaminoharzaddukten mit maskierten Polyisocyanaten hergestellt werden.

Die vorliegende Erfindung stellt sich daher die Aufgabe, spezifische Harze und ein neues Verfahren zur Vernetzung von kathodisch abscheidbaren Überzugsmitteln bereitzustellen, mit denen höhere Schichtdicken bis zu 40—50 μm realisiert werden können und das Einbrennen der Überzugsmittel ohne Einbuße von physikalischen Eigenschaften bei einer Temperatur zwischen 100°C und 140°C ausgeführt werden kann, ohne daß hierbei in unrentabler Weise flüchtige Polyisocyanatblockierungsmittel abgespalten werden, die mit der Abluft verloren gehen und die Umwelt belasten.

Die Aufgabe wird erfindungsgemäß durch selbstvernetzende kataphoretische amidgruppenhaltige Aminoharnstoffharze mit gegebenenfalls Urethangruppierungen gelöst, die dadurch gekennzeichnet sind, daß sie das Reaktionsprodukt von mindestens

(A) einem Polyaminoamid, das aus
- (1) einer oder mehreren überwiegend höheren Fettsäure(n) und einem oder mehreren Alkylen- bzw. Polyalkylen-polyaminen und/oder
- (2) Dimerfettsäuren, gegebenenfalls im Gemisch mit vorwiegend höheren, im wesentlichen ungesättigten Fettsäuren, und einem oder mehreren Alkylen- bzw. Polylalkylenpolyaminen hergestellt worden ist und zusätzlich teilweise unter Wasserabspaltung entstandene cyclische Amidingruppierungen und gegebenenfalls als Ketimin blockierte Aminogruppen enthält,

(B) einem Diisocyanat und gegebenenfalls von

(C)
- (1) einem primären und/oder sekundären Allyl- bzw. Methallylamin und/oder
- (2) einem oder mehreren gesättigten primären und/oder sekundären aliphatischen, cycloalophatischen, heterecyclischen oder aromatischen Aminen und/oder
- (3) einem Allyl- bzw. Methallylalkohol und/oder
- (4) einem oder mehreren cyclischen oder polycyclischen Alkoholen, die in ihren cyclischen oder polycyclischen Ringsystemen olefinisch ungesättigt sind, und/oder
- (5) einem Monoalkohol mit einem tert. N-Atom und/oder Diol mit gegebenenfalls einem tertiären N-Atom

darstellen und mit einer Säure unter Ausbildung von kationischen Gruppen in Wasser dispergierbar gemacht worden sind.

Die Polyamid-Komponente A (1) leitet sich bezüglich der Säurekomponente vorwiegend von höheren Fettsäuren ab. Diese können gesättigte Fettsäuren darstellen, aber auch eine ode mehrere Doppelbindungen enthalten. Beispiele für die in natürlichen Ölen, wie Leinöl, Tallöl und Ricinusöl. als Fettsäurederivate vorkommenden mehrfach ungesättigten Fettsäuren sind 9.11-Octadecadiensäure, 9.12-Octadecadiensäure, Linolsäure, Linolensäure, α-Eläostearinsäure und β-Eläostearinsäure. Beispiele für einfach ungesättigte Fettsäuren sind z. B. Ölsäure, deren höheren Homologe und Zoomarinsäure. Selbstverständlich können auch entsprechende und ähnliche synthetische Fettsäuren als Ausgangsmaterial dienen. Die im wesentlichen ungesättigten Fettsäuren können als Polyaminoamidbestandteile einzeln oder als Gemisch eingesetzt werden. Aus ökonomischen Gründen wird es jedoch bevorzugt, die im Handel erhältlichen Gemische derartiger Säuren einzusetzen, die auch noch gesättigte Fettsäuren enthalten.

So eignen sich als Säurekomponente für das Polyaminoamid (A) (1) insbesondere Ricinenfettsäuren. Diese stellen Gemische dehydratisierter Ricinusöl-Fettsäuren dar und bestehen im wesentlichen aus 9.11-Octadecadiensäure und 9.12-Octadiensäure (Ricinensäuren) neben 7—7% Ölsäure und 3—5% gesättigter Fettsäuren. Ebenso sind auch die Leinölfettsäuren geeignet, die Gemische aus Linolensäure (~38%), Linolsäure (~42%), Ölsäure (~10%), Stearinsäure (~3%) und Palmitinsäure (~7%) darstellen, deren prozentuale Zusammensetzung natürlich in Grenzen schwanken kann. Auch Tallölfettsäuren,

die als Fettsäuren insbesondere Palmitin-, Stearin-, Olein-, Linol- und Linolensäure enthalten, sind verwendbar.

Als höhere Fettsäuren lassen sich grundsätzlich auch gesättigte Fettsäuren, wie Stearin- und Pamitinsäure, verwenden oder mitverwenden. Häufig empfiehlt es sich, die langkettigen Fettsäuren zu einem Teil durch kurzkettige Fettsäuren wie Essigsäure, Propionsäure oder Buttersäure zu ersetzen. Dies führt in einigen Fällen zu stabileren Suspensionen und härteren eingebrannten Filmen.

Die Polyamid-Komponente (A) (1) kann sich bezüglich der Aminokomponente von einem Äthylendiamin und/oder einem Polyäthylenpolyamin ableiten. Als Beispiele derartiger Verbindungen seien genannt: Äthylendiamin, Diäthylen-triamin, Triäthylentetramin, Tetraäthylen-pentamin, Gemische von Polyäthylen-polyaminen der Formel

$$H_2N-(CH_2-CH_2-NH)_n-CH_2-CH_2-NH_2$$

worin $n = 1$ und/oder 2 und/oder 3 bedeuten. Sie enthalten zusätzlich Imidazolinringe, die durch intramolekulare Wasserabspaltung der Aminamide hervorgehen:

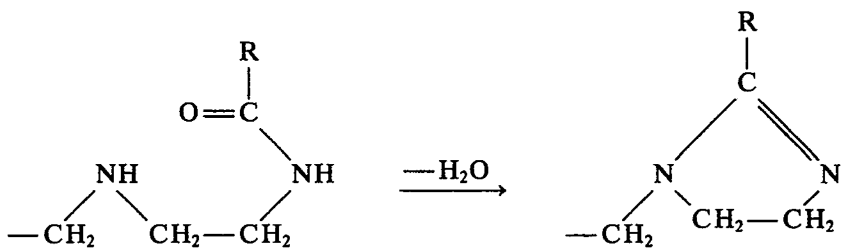


Häufig empfiehlt es sich für eine Verbesserung der Dispergierbarkeit des Harzes in Wasser und für eine stärkere Vernetzung bei dem Einbrennvorgang, einen Teil der primären Aminogruppen nicht mit Säuren zum Amid umzusetzen, sondern mit Keton als Ketimin zu blockieren. Geeignete Ketone sind z. B. Methylisobutylketon, Methyläthylketon, Cyclohexanon. In der wäßrigen Suspension wird das Keton abgespalten und das primäre Amin zurückgebildet.

Des weiteren können gemischte Polyalkylpolyamine der allgemeinen Formel

$$H_2N-CH_2-CH_2-CH_2NH-R-NH-CH_2-CH_2-CH_2-NH_2$$

worin R Äthylen ($-CH_2-CH_2$) oder Diäthylenamin ($-CH_2-CH_2-NH-CH_2-CH_2-$) bedeutet, verwendet werden. Sie lassen sich durch Addition der entsprechenden Amine (Äthylendiamin oder Diäthylentetramin) an Acrylnitril und anschließende Hydrierung leicht herstellen.

Die aus diesem Polyamin mit Säuren hergestellten Polyamide können unter drastischen Reaktionsbedingungen ebenfalls intramolekular Wasser abspalten und dabei Tetrahydropyrimidinderivate bilden.

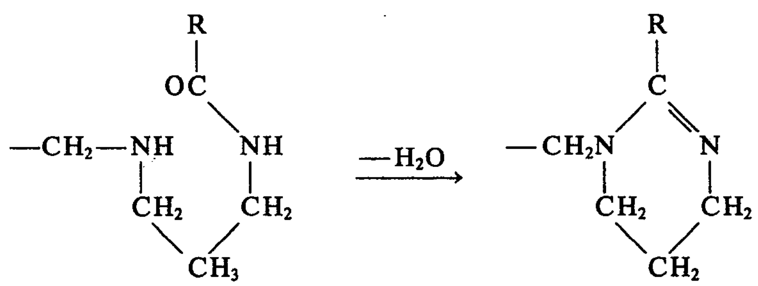


Auch bei diesen Polyaminoamiden ist es häufig von Vorteil, wenn ein Teil der primären Amino-Gruppen nicht mit Säuren umgesetzt, sondern mit Keton als Ketimin blockiert wird, das in wäßriger Suspension wieder gespalten wird.

Es wird bevorzugt, daß das Polyaminoamid A (1) ein Reaktionsprodukt aus Ricinenfettsäuren oder Ricinenfettsäuren und Essigsäure oder Stearinsäure mit einem oder mehreren Alkylen- bzw. Polylalkylenpolyaminen der Formeln

$$H_2N-(CH_2-CH_2-NH)_n-CH_2-CH_2-NH_2$$

worin $n = 0$ und/oder 1 und/oder 2 und/oder 3 bedeuten, und/oder

$$H_2N-CH_2-CH_2-CH_2-NH-R-NH-CH_2-CH_2-CH_2-NH_2$$

worin R = $-CH_2-CH_2-$ bedeuten, ist und das Reaktionsprodukt zusätzlich teilweise unter Wasserabspaltung entstandene Imidazolin- und/oder Tetrahydropyrimidinringe und gegebenenfalls Ketimingruppen enthält.

Die Polyaminoamid-Komponente (A) (2) leitet sich bezüglich der Säurekomponente von Dimerfettsäuren ab. Diese werden ihrerseits aus pflanzlichen doppelt oder dreifach ungesättigten Fettsäuren (Linol-, Linolen- und Rizinensäure, Holzöl-Fettsäure) bzw. deren Methylestern durch thermische Dimerisation, meist in Gegenwart von Katalysatoren (Bentonit, Montmorillonit, Fullererde), hergestellt. Die im wesentlichen nach Diels-Alder verlaufende Additionsreaktion setzt eine Isomerisierung zu Säuren mit konjugierter Doppelbindung voraus. Neben den Dimerfettsäuren können dabei noch 20—30% trimere Fettsäuren entstehen. Zum Aufbau der Polyaminoamid-Komponente (A) (2) können den Dimerfettsäuren bis zu 60 Gewichtsprozent der oben beschriebenen höheren, im wesentlichen ungesättigten Fettsäuren zugemischt werden, insbesondere Tallölfettsäuren und Ricinenfettsäuren.

Als Aminokomponente der Polyaminoamide (A) (2) kommen insbesondere Polyäthylenamine oder ihre Gemische vom Typ

$$H_2N—(CH_2—CH_2—NH)_n—CH_2—CH_2—NH_2$$

mit n = 0 – 3 in Betracht. Bei der Umsetzung dieser Polyäthylenamine mit Dimerfettsäuren, gegebenenfalls im Gemisch mit höheren, im wesentlichen ungesättigten Fettsäuren, wird zusätzlich teilweise die Bildung von Imidazolin-haltigen Kondensationsprodukten angestrebt, die durch Cyclisierung der Aminoamidkomponente unter Abspaltung von 1 Mol Wasser erfolgt. Zu diesem Zweck wird das beispielsweise bei 160°C hergestellte Umsetzungsprodukt aus den dimeren Fettsäuren und dem Polyäthylenamin z. B. 6 Stunden lang auf 300°C erhitzt. Die in Rede stehenden Produkte sind z. B. unter dem Warenzeichen Versamid im Handel erhältlich (Firma Schering).

Eine weitere geeignete Aminkomponente für das Polyaminoamid (A) (2), auch in Form eines Gemisches mit den obigen Polyäthylenaminen, ist z. B. das Polyalkylenpolyamin der Formel

$$H_2N—CH_2—CH_2—CH_2—NH—R—NH—CH_2—CH_2—CH_2—NH_2$$

Hierin bedeutet R = $-CH_2-CH_2-$ oder $-CH_2-CH_2-NH-CH_2-CH_2-$. Bei der Umsetzung dieser Polyalkylenpolyamine mit Dimerfettsäuren, gegebenenfalls im Gemisch mit Ricinenfettsäuren oder anderen höheren, im wesentlichen ungesättigten Fettsäuren, wird durch intramolekulare Wasserabspaltung die teilweise Bildung von Tetrahydropyrimidinringen angestrebt.

Es wird bevorzugt, daß das Polyaminoamid (A) (2) ein Reaktionsprodukt aus Dimerfettsäuren und gegebenenfalls Tallölfettsäuren oder Ricinenfettsäuren mit einem oder mehreren Polyalkylen-polyaminen der Formel

$$H_2N—(CH_2—CH_2—NH)_n—CH_2—CH_2—NH_2$$

worin n = 0 und 1 – 3 oder 1 und/oder 2 und/oder 3 bedeuten, ist und das Reaktionsprodukt teilweise unter Wasserabspaltung entstandene Imidazolinringe und gegebenenfalls Ketimingruppen enthält.

Die Polyaminoamide A (2) enthalten in den überwiegenden Fällen ebenfalls primäre Aminogruppen. Auch hierbei ist es häufig von Vorteil, wenn man sie vor der Umsetzung mit Polyisocyanaten mit Keton als Ketimin blockiert. Für dieses Blockieren kommen dieselben Ketone in Betracht, wie bei den Polyamidoamidkomponenten A (1).

Zur Bildung von amidgruppenhaltigen Aminoharzstoffharzen mit gegebenenfalls Urethangruppierungen wird das Polyaminoamid (A) (1) und/oder (A) (2) u. a. mit einem oder mehreren Diisocyanaten nach an sich konventionellen Verfahrensmethoden umgesetzt. Zu den hierbei verwendbaren Diisocyanaten gehören beispielsweise die aliphatischen Diisocyanate, wie z. B. 1,6-Hexamethylendiisocyanat, 1,8-Octamethylendiisocyanat, 1,12-Dodecamethylendiisocyanat, 2,2,4-Trimethylhexamethylendiisocyanat und ähnliche Alkylendiisocyanate, 3,3'-Diisocyanatdipropyläther, 3-Isocyanatmethyl-3,5,5-trimethyl-cyclohexylisocyanat, Cyclopentylen-1,3-diisocyanat, Cyclohexylen-1,4-diisocyanat, 4-Methyl-1,3-diisocyanatcyclohexan, trans-Vinylidendiisocyanat und ähnlich ungesättigte Diisocyanate, 4,4'-Methylen-bis(isocyanatcyclohexan) und verwandte Isocyanate, aromatische Diisocyanate, wie 4,4'-Diisocyanatodiphenyl, 4,4'-Diisocyanato-3,3'-dichlor-diphenyl, 4,4'-Diisocyanato-3,3'-dimethoxy-dimethyl, 4,4'-Diisocyanato-3,3'-dimethyl-diphenyl, 4,4'-Diisocyanato-3,3'-diphenyl-diphenyl, 4,4'-Diisocyanato-diphenylmethan, 4,4'-Diisocyanato-3,3'-dimethyl-diphenylmethan, 1,5-Diisocyanatonaphthalin, Diisocyanatotoluole,N,N'-(4,4'-Dimethyl-3,3'-diisocyanatodiphenyl)-uretdion und Bis-1,3-(isocyanatomethyl)-benzol.

Es wird bevorzugt, daß die Komponente (B) ein Gemisch aus 2,4- und 2,6-Diisocyanatotoluol und/oder 4,4'-Diisocyanatodiphenylmethan ist.

Zur leichteren Steuerung spezifischer Harzeigenschaften, beispielsweise zur Erzielung einer stärkeren Vernetzung oder einer Kettenverlängerung des Makromoleküls oder einer besseren Dispergierbarkeit oder verbesserten Verlaufseigenschaften, kann gegebenenfalls die Mitverwendung einer oder mehrerer der im Anspruch 1 ausgeführten Verbindungen (C) vorteilhaft sein.

Im Rahmen der Verbindungen C (1) eignen sich im Prinzip alle ungesättigten Amine, insbesondere die primären oder sekundären Allyl- bzw. Methallylamine, z. B. Allylamin, Methallylamin, Diallylamin und Dimethallylamin.

Weitere geeignete Verbindungen für die Komponente C (2) stellen gesättigte primäre und/oder sekundäre aliphatische und cycloaliphatische sowie aromatische und heterocyclische Amine dar. Diese insbesondere als Kettenabbrecher wirksamen Verbindungen tragen zur Vermeidung einer zu starken Vernetzung des Harzes und zur Erhöhung der Härte bei den eingebrannten Filmen bei. Sie verbessern im allgemeinen das Emulgierverhalten in Wasser. Verwendbar sind z. B. Äthylamin, Propylamin, Di-n-propylamin, Di-i-propylamin, Di-sec-butylamin, n-Butylamin, sek.-Butylamin, n-Hexylamin, n-Octylamin, 2-Äthyl-hexylamin, n-Decylamin, i-Amylamin, Di-i-amylamin, Di-i-butylamin, $\alpha$-Naphthylamin, Pyrrolidon, Diäthylamin, Cyclohexylamin, Piperidin, Anilin, Methylanilin usw.

Es können nicht nur die Einzelverbindungen als solche, sondern auch Mischungen von zwei oder mehreren der oben beispielhaft genannten Amine verwendet werden. Dies gilt auch für Mischungen mit den anderen für die Komponente (C) genannten Verbindungsklassen.

Als Komponente C eignen sich ebenfalls ungesättigte Alkohole, insbesondere Allylalkohol und Methallylalkohol. Sie wirken nicht nur als Kettenabbrecher, sondern nehmen über die reaktive Doppelbindung an der späteren Vernetzung des Harzes teil.

In gleicher Weie wirken die cyclischen oder polycyclischen Alkohole, die in ihrem cyclischen oder polycyclischen Ringsystem olefinisch ungesättigt sind. Beispiele besonders gut geeigneter Verbindungen sind in den nachfolgenden Formelbildern dargestellt.

(1) 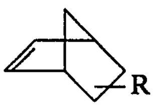 Norborneyl-

(2) 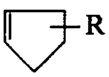 Cyclopentenyl-

(3) 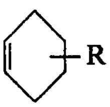 Cyclohexenyl-

(4) 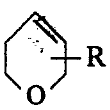 3-Dihydropyranyl-

(5) 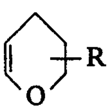 2-Dihydropyranyl-

(6) 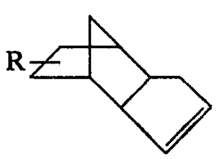 Dicyclopentenyl-

Hierin bedeuten R insbesondere die Gruppierungen

$-OH \quad -CH_2OH \quad -CH_2-CH_2OH \quad -O-CH_2-CH_2-OH$

$-CH_2-O-CH_2-CH_2-OH \quad -CH_2-O-CH_2-\underset{\displaystyle OH}{\underset{|}{CH}}-CH_3$

und

$-CO-NH-CH_2-CH_2-OH$

Im Rahmen der Komponente C (5) eignen sich als Kettenabbrecher auch gesättigte Monoalkohole, die ein tertiäres N-Atom enthalten, wie z. B. Dimethyläthanolamin. Weitere Verbindungen dieser Art sind zum Beispiel Diäthyläthanolamin, Dipropyläthanolamin, Dibutyläthanolamin, 4-(2-Hydroxyäthyl)-morpholin und Äthyloxäthylanilin.

Für den Aufbau von Polyharnstoffurethan-Harzen ist es manchmal vorteilhaft, für die Komponente (C) als Kettenverlängerungsmittel Diole mit gegebenenfalls einem tertiären N-Atom einzusetzen. Beispiele

solcher Diole sind Polyglykole, wie Polyäthylenglykol und Polypropylenglykol und deren Mischpolymerisate mit einem Molekulargewicht bis zu 1000, Glycerinmonoäther der allgemeinen Formel

$$R—O—CH_2—CHOH—CH_2OH$$

wobei R eine Dicyclopentenyl-, Äthoxidicyclopentyl-, Norborneyl-, Dihydropyranyl-, Cyclopentenyl-, Cyclohexenyl-Gruppe bedeutet, Methyldiäthanolamin, n-Butyldiäthanolamin und Cyclohexyldiäthanolamin.

Die Mengenverhältnisse der Ausgangskomponente (A), (B) und (C) werden so gewählt, daß im Harz der Gehalt der Polyaminoamidkomponente (A) zwischen 30—80 Gew.-%, der Gehalt der Diisocyanatkomponente (B) zwischen 10—45 Gew.-% und bei Verwendung der Komponente (C) deren Gehalt bis zu 40 Gew.-% beträgt.

Die Aminogruppen der auf der Basis der verschiedenen Variationsmöglichkeiten der Ausgangskomponenten (A) bis (C) hergestellten Harze werden mit einer Säure wenigstens teilweise, z. B. zu 10, 30, 50, 70 oder 80%, zu Aminsalzgruppen umgesetzt und das Harz damit wasserdispergierbar gemacht. In diesem Zusammenhang wird es bevorzugt, daß der basische N-Gehalt des Harzes 0,5—2,5 Äquivalente/1000 g Harz und der Neutralisationsgrad des mit Säure umgesetzten basischen Harzes 0,1—1 Äquivalente/1000 g Harz beträgt. Die Bildung von Aminsalzgruppen wird in bekannter Weise mittels einer anorganischen, organischen, komplexbildenden oder nicht komplexbildenden Säure bewerkstelligt. Beispiele geeigneter Säuren, die auch als Gemische verwendet werden können, sind Carbonsäuren, wie Ameisensäure, Essigsäure und Propionsäure, Glykolsäure, Milchsäure und Weinsäure, sowie anorganische Säuren wie Schwefel- und Phosphorsäure. Die Säure wird zur besseren Einarbeitung mit Wasser verdünnt zugegeben. Im allgemeinen verwendet man soviel Wasser, daß danach eine Suspension mit 50—80% Feststoffgehalt erhalten wird.

Außer Wasser kann das wäßrige Medium der besseren Löslichkeit wegen noch ein anderes Lösungsmittel enthalten. Derartige Lösungsmittel sind z. B. Ester, wie die Monomethyl-, Monoäthyl-, Monobutyl- und Monohexyläther der Äthylenglykolacetate, Ketone, wie Diäthylketon und Methylisobutylketon, oder Diäther von Glykolen oder Diglykolen, wie Diglykoldiäthyläther und Diglykol-di-n-butyläther, außerdem Tetrahydrofuran und Dioxan. Die Menge liegt im allgemeinen zwischen 2 und 20 Gew.-%, bezogen auf das Gesamtgewicht des wäßrigen Mediums.

Das Produkt mit einem Feststoffgehalt von 50—80 Gew.-% kann mittels herkömmlicher Mischtechniken unter weiterer Verdünnung mit Wasser als 10 bis 25 Gew.-%ige Dispersion mit Schwefel und/oder Sikkativen auf der Basis von Naphthenaten, Oleaten oder Acetaten von Schwermetallverbindungen wie die des Kobalts, Mangans, Blei oder Zinks, und/oder Pigmenten auf der Basis von Schwermetallverbindungen, wie $TiO_2$, $PbCrO_4$, $PbSiO_3$, Bleiacetat und $SrCrO_4$, und/oder Füllstoffen, wie $SiO_2$, Talkum und Ruß, homogen vermischt werden, wodurch die Härte und die Korrosionsstabilität der eingebrannten Filme noch weiter erhöht wird. Darüber hinaus ist es ebenfalls möglich, den Schwefel und/oder die Sikkative und/oder die Pigmente unter Verwendung eines gekühlten Walzenstuhles mit der 50 bis 60 Gew.-%igen Harzdispersion gleichmäßig zu verreiben. Die erhaltene Mischung wird sodann in Wasser dispergiert und mit weiterem Wasser auf die in der Praxis übliche Konzentration von 10—25 Gew.-% verdünnt.

Die wäßrige Beschichtungsmasse, die bevorzugt in Mengen von 1 bis 20 Gewichtsprozent, bezogen auf das Harz, Schwefel und/oder Sikkative auf der Basis von Naphthenaten, Oleaten oder Acetaten von Schwermetallverbindungen und/oder Pigmente auf der Basis von Schwermetallverbindungen und/oder Füllstoffe enthält, kann weiterhin die üblichen Hilfsmittel und Zusatzstoffe, wie oberflächenaktive Stoffe, Antiabsetzmittel, Antioxydantien und Farbstoffe enthalten. Die Dispersionen zeichnen sich durch gute Stabilität, hohe Durchschlagsspannung und gute Umgriffswerte aus. Das anwendungsfähige Überzugsmittel wird mit der Anode und dem zu beschichtenden elektrisch leitfähigen Substrat in Berührung gebracht, das als Kathode fungiert. Die zu ihrer Abscheidung auf der Kathode angewendete Spannung beträgt in der Regel 200 bis 350 Volt, die anfängliche Stromdichte durch Strombegrenzung 0,1 bis 1 A/100 $cm^2$. Die genannten Bedingungen sind also im allgemeinen denjenigen ähnlich, die üblicherweise für die Abscheidung anderer kationischer Harze verwendet werden.

Nach dem Aufbringen der Beschichtungsmasse wird das aus Stahl, Aluminium oder einer Metall-Legierung bestehende Substrat in üblicher Weise gewaschen, getrocknet und anschließend zur Härtung auf eine Temperatur ab 100°C, vorzugsweise von 120 bis 140°C, erhitzt. Die erfindungsgemäßen selbstvernetzenden amidgruppenhaltigen Aminoharzstoffharze mit gegebenenfalls Urethangruppierungen gestatten es, Schichtdicken bis zu 40—50 μm zu erreichen, und das bei Verwendung niedrigerer Temperaturen als im Falle der bisher üblichen Isocyanatvernetzung. Sie sind nicht nur energiesparend, sondern auch umweltfreundlich, da in den erfindungsgemäßen Harzsystemen keine flüchtigen Polyisocyanatblockierungsmittel verwendet werden.

Infolge der erniedrigten Einbrenntemperatur ist es möglich, Metallteile, die Kunststoffeinbauten oder einseitige Kunststoffüberzüge aufweisen, mit diesen Kataphoreseharzen zu beschichten und gemeinsam einzubrennen.

Die erzielten hohen Schichtdicken machen eine Zweischichtlackierung von Fahrzeugkarossieren möglich.

Die Salzsprühtestwerte sind im allgemeinen gut. Phosphatierte Stahlbleche, die selbst mit den unpigmentierten Filmen versehen wurden, zeigen nach 300 Std. noch keine Unterwanderung am Kreuzschnitt.

Anhand der folgenden Beispiele wird die Erfindung näher erläutert. Die in den folgenden Darlegungen enthaltenen Warenzeichen werden als solche anerkannt.

### I. Herstellung der Aminoalkylenricinenamide (Tabelle 1)

Das Polyalkylenamin wird in etwa der gleichen Menge Methanol gelöst und unter Rühren mit einer etwa 70%igen Lösung der organischen Säuren in Methanol versetzt. Anschließend erhitzt man das Gemisch zunächst unter Abdestillieren des Lösungsmittels und schließlich des Reaktionswassers auf 170–180°C. Hierbei tritt neben der Amidbildung mit fortschreitender Zeit die Imidazolidin- bzw. Tetrahydropyrimidinbildung ein. Die Bestimmung des gesamten basischen Amins erfolgt durch Titration mit n/10 $HClO_4$ in Eisessig, die des basischen cyclischen Amidin-Stickstoffs nach Acetylierung der primären und sekundären Amine ebenfalls durch Titration mit n/10 $HClO_4$ in Eisessig.

Im Falle der Herstellung des Ketimins versetzt man das Reaktionsgemisch nach der Amidbildung und dem teilweisen Ringschluß mit Keton und Toluol und kreist mit Hilfe eines Wasserabscheiders das Reaktionswasser aus. Überschüssiges Keton und Toluol werden anschließend unter Vakuum abgezogen.

### II. Allgemeine Vorschriften zur Herstellung der amidgruppenhaltigen Polyharnstoffe

#### 1. Amidgruppenhaltige Polyharnstoffe (Tabellen 2–5)

Man löst die Polyaminoamide A und die Amine in der gleichen Gewichtsmenge MEK (= Methyläthylketon) und gibt bei 20–30°C eine 50%ige Lösung bzw. Suspension von Diisocyanat in MEK unter Rühren und $N_2$-Atmosphäre innerhalb von ca. 15 Minuten hinzu. Man läßt noch 15 Minuten bei Raumtemperatur nachreagieren, gibt anschließend die 4fache Menge, bezogen auf Feststoff, an entionisiertem Wasser, vermischt mit 0,3 mMol Essigsäure pro g Feststoff, bei Raumtemperatur hinzu und läßt 3–4 Tage im offenen Gefäß rühren. Danach wird das Harz kataphoretisch auf phosphatierten Eisenblechen (Bonder 101) abgeschieden, bei maximal 140°C eingebrannt, und anschließend werden Pendelhärte und Filmstärke gemessen.

Eventuelle Zusätze, wie elementarer Schwefel oder Siccative, werden feinstverteilt vor der Abscheidung in die wäßrige Suspension oder bei Anwesenheit von Pigmenten in die Pigmentpaste mit eingearbeitet.

#### 2. Amidgruppenhaltige Polyharnstoffe mit Urethangruppierungen

a) bei Verwendung von Monoalkohol, die olefinische Gruppierungen tragen (Tabelle 6):

Man stellt zunächst das urethangruppenhaltige Isocyanat durch Reaktion des Diisocyanats mit dem ungesättigten Alkohol in gleichen Gewichtsteilen an Methyläthylketon bei 50°C und einer Reaktionszeit von 1 Stunde her und tropft diese 50%ige Lösung anschließend innerhalb von 15 Minuten unter Rühren und $N_2$-Atmosphäre bei 20–30°C in die 50%ige Lösung der gemischten Polyaminoamide A in MEK. Nach einer Nachreaktionszeit von etwa 15 Minuten setzt man bei Raumtemperatur die berechnete Essigsäuremenge (50%ige Neutralisation des basischen Stickstoffs) und soviel entionisiertes Wasser zu, daß nach Abziehen des Lösungsmittels im Vakuum eine 20%ige Suspension resultiert. Nach 3–4tägigem Rühren im offenen Gefäß bei Raumtemperatur wird das Harz kataphoretisch auf phosphatiertem Eisenblech (Bonder 101) abgeschieden. Von den bei $\leq$ 140°C eingebrannten Filmen werden Pendelhärte und Filmstärke gemessen.

Die Zusätze werden feinstverteilt in die Suspension eingetragen.

b) bei Verwendung von Diolen und Monoalkoholen, die tertiäre Aminogruppen enthalten (Tabelle 7):

In einem mit Rührer, Tropftrichter und Thermometer versehenen Reaktionsgefäß werden in $N_2$-Atmosphäre das Ricinenamid III a, sowie die in Tabelle 7 genannten kettenverlängernden Alkohole der Gruppe C (5) vorgelegt, gelöst in der 3–5fachen Gewichtsmenge wasserfreien Acetons, Tetrahydrofurans oder Dioxans. Bei Raumtemperatur tropft man innerhalb von 30–90 Minuten die Lösung des Diisocyanats in der 3–5fachen Menge des gleichen Lösungsmittels zu, anschließend daran den Kettenabbrecher C (5). Die Nachreaktionszeit beträgt 60 Minuten. Danach wird das entstandene Aminoharz mit Essigsäure zu 50% teilneutralisiert und mit soviel Wasser versetzt, daß nach Abziehen des organischen Lösungsmittels bei 60°C/30 Torr (0,04 Bar) im Rotationsverdampfer eine 20%ige Polymer-

dispersion entsteht. Nachdem man noch weitere Zusätze, wie beispielsweise Sikkative, zugegeben hat, erfolgt die kathodische Abscheidung unter den angegebenen Bedingungen.

## III. Herstellung der Pigmentpasten

### 1. Pigmentpaste 1

$TiO_2$, $SiO_2$, Bleisilikat und Ruß (Gewichtsverhältnis 1 : 0,84 : 0,21 : 0,04) werden mit der doppelten Menge der mit Essigsäure teilneutralisierten (0,3 mMol AcOH/g Feststoff), 50%igen Harzsuspension des Beispiels Nr. 13 der Tabelle 4 (Gewichtsverhältnis MEK : Wasser = 1 : 0,73) vermischt und auf einem gekühlten Walzenstuhl mehrmals innig verrieben.

Diese Pigmentpaste wird dann dem Harz des Beispiels Nr. 13 der Tabelle 4 in einem solchen Verhältnis zugemischt, daß die Pigmentpaste (ohne Lösungsmittel berechnet) 28,4% des Lackfeststoffes ausmacht. Das Verhältnis von Harz zu Pigmenten beträgt demnach 1 : 0,166. Nach Verdünnen mit Wasser auf einen Feststoffgehalt von 20% wird der Lack wie üblich abgeschieden.

### 2. Pigmentpaste 2

$TiO_2$, Talkum, Ruß und Bleisilikat (Gewichtsverhältnis 1 : 0,63 : 0,50 : 0,15) werden mit der mit Essigsäure zu 50% teilneutralisierten 40%igen Harzsuspension des Beispiels Nr. 2a der Tabelle 6 in einem Gewichtsverhältnis von Harz zu Pigmenten wie 1 : 0,228 innig in der Sandmühle verrieben. Nach Verdünnen auf 20% Feststoffgehalt wird der Lack wie üblich abgeschieden.

## IV. Abkürzungen in den Tabellen 1–7:

### 1. Für Umsetzungsprodukte mit Polyaminen

I a = Versamid 140 Handelsprodukt von Schering
I b = Versamid 115 Handelsprodukt von Schering
I c = Versamid 100 Handelsprodukt von Schering
I d = Euredur 370 Handelsprodukt von Schering
I e = Euredur 200 Handelsprodukt von Schering
I f = MIBK-Ketimin von Versamid 140
I g = MIBK-Ketimin von Euredur 200

| | Gesamt-Aminzahl | tert. Aminzahl |
|---|---|---|
| II a = 1 DETA · 2 Ric | 108 | 5 |
| II b = 1 DETA · 2 Ric | 102 | 37 |
| II c = 1 DETA · 2 Ric | 100 | 69 |
| II d = 1 DETA · 1,6 Ric · 0,4 MIBK | 143 | hoch |
| II e = 1 DETA · 1,6 Ric · 0,4 MIBK | 153 | gering |
| III a = 1 TETA · 2 Ric | 192 | 26 |
| III b = 1 TETA · 2 Ric | 171 | 32 |
| III c = 1 TETA · 2 Ric | 170 | 58 |
| III d = 1 TETA · 2 Ric | 165 | 83 |
| III e = 1 TETA · 2 Stearinsäure | 156 | 75 |
| III f = 1 TETA · 1,4 Ric · 0,5 AcOH | 209 | 39 |

Fortsetzung

| | Gesamt-Aminzahl | tert. Aminzahl |
|---|---|---|
| IIIg = 1 TETA · 1 Ric · 0,5 Dimerfettsäure | 162 | 62 |
| IV = $N_4$ · 2 Ric | 180 | 22 |

## 2. Weitere Stoffabkürzungen

DETA = Diäthylentriamin
TETA = Triäthylentetramin
$N_4$ = N,N'-Bis(3-aminopropyl)äthylendiamain
AcOH = Essigsäure
(ac) = Acetat
Stearin-Me = Stearinsäuremethylester
Ric-Me = Ricinensäuremethylester
Ric = Ricinenfettsäure
MIBK = Methylisobutylketon
Dimerfettsäure von Shell
Dimer-Me = Dimerfettsäure-dimethylester
TDI = 2,3- bzw. 2,6-Diisocyanatotoluol (Gemisch)
MDI = 4,4'-Diisocyanato-diphenylmethan

## 3. Für Derivate der cyclisch ungesättigten Verbindungen

Va = 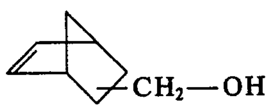 Hydroxymethylennorbornen

Vb = 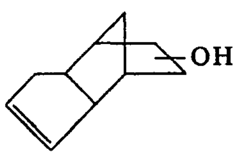 Hydroxydicyclopenten

Vc = 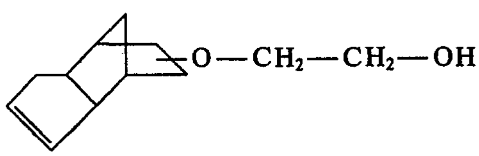 Dicyclopentenylmonoglykoläther

Vd = 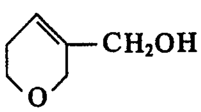 3-(Hydroxymethylen-)-dihydropyran-3

Ve = 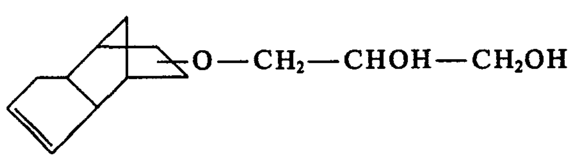 1-Glyceryldicyclopentenyläther

Vf = 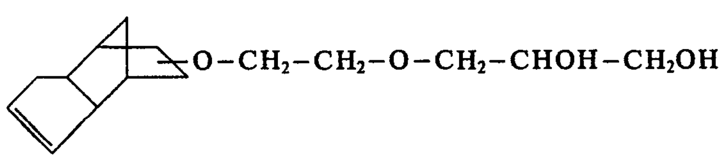 Dicyclopentenyl-glyceryl-1-bisglykoläther

Tabelle 1

Herstellung der Polyaminoamide A (zu den Tabellen 2–7)

| Vers.-Nr. | Produkt | Reaktionskomponenten | | | | | | | 1. Stufe (Normaldruck) | | | |
|---|---|---|---|---|---|---|---|---|---|---|---|---|
| | | Polyamine | Gewicht (g) | Säurekomponenten | Gewicht (g) | Blockierungsmittel | Gewicht (g) | Molverhältnis der Reaktionskomponenten | Reaktionstemp. (°C) | Zeit (h) | Ges.-Aminzahl | tert. Aminzahl |
| 1 | II a | DETA | 103 | Ric | 540 | | | 1 : 2 | 170–180 | 0,5 | | |
| 2 | II b | DETA | 103 | Ric | 540 | | | 1 : 2 | 180 | 1,2 | 113 | 4 |
| 3 | II c | DETA | 103 | Ric | 540 | | | 1 : 2 | 180 | 1 | | |
| 4 | II d | DETA | 103 | Ric | 432 | MIBK | 120 | 1 : 1,6 + 0,4 | 175 | 3 | | |
| 5 | II e | DETA | 361 | Ric | 1512 | MIBK | 120 | 1 : 0,6 + 0,4 | 175 | 1,5 | | |
| 6 | III a | TETA | 44 | Ric-Me | 170 | | | | 150 | 3 | | |
| 7 | III b | TETA | 73 | Ric | 270 | | | 1 : 2 | 180 | 2 | 171 | 32 |
| 8 | III c | TETA | 73 | Ric | 270 | | | 1 : 2 | 180 | 2 | | |
| 9 | III d | TETA | 73 | Ric | 270 | | | 1 : 2 | 180 | 3 | 170 | 44 |
| 10 | III e | TETA | 29 | Stearin-Me | 119 | | | 1 : 2 | 155 | 0,5 | | |
| 11 | III f | TETA | 146 | Ric + AcOH | 378 +36 | | | 1 : 1,4 : 0,6 | 180 | 1,75 | 209 | 39 |
| 12 | III g | TETA | 59 | Ric+ Dimer-Me | 108 +114 | | | 1 : 1 : 0,5 | 170 | 0,5 | | |
| 13 | IV | $N_4$ | 52 | Ric | 162 | | | 1 : 2 | 170 | 0,5 | | |

Tabelle 1 (Fortsetzung)

| Vers.-Nr. | Produkt | 2. Stufe | | | | | 3. Stufe | | | | |
|---|---|---|---|---|---|---|---|---|---|---|---|
| | | Reaktions-temp. (°C) | Zeit (h) | Druck (Torr) ($^1/_{750,06}$ Bar) | Gesamt-Aminzahl | tert. Aminzahl | Reaktions-temp. (°C) | Zeit (h) | Druck (Torr) ($^1/_{750,06}$ Bar) | Gesamt-Aminzahl | tert. Aminzahl |
| 1 | II a | 180 | 1,5 | 760 | 108 | 5 | | | | | |
| 2 | II b | 170 | 4 | 26 | 102 | 37 | | | | | |
| 3 | II c | 180 | 6,25 | 30 | 100 | 69 | | | | | |
| 4 | II d | 165 | 3 | 760 | | | 120 | 3 | 30 | 143 | n. b. |
| 5 | II e | 170 | 1 | 760 | | | 120 | 0,75 | 30 | 153 | n. b. |
| 6 | III a | 150 | 2 | 50 | 192 | 25 | | | | | |
| 7 | III b | – | – | – | – | – | | | | | |
| 8 | III c | 150 | 3,25 | 30 | 170 | 58 | | | | | |
| 9 | III d | 155 | 4 | 26 | 165 | 83 | | | | | |
| 10 | III e | 160 | 3,5 | 30 | 156 | 75 | | | | | |
| 11 | III f | – | – | – | – | – | | | | | |
| 12 | III g | 170 | 4 | 25 | 162 | 62 | | | | | |
| 13 | IV | 170 | 4 | 30 | 180 | 22 | | | | | |

n. b. = nach den üblichen Analysemethoden nicht bestimmbar

Tabelle 2

Amidgruppenhaltige Aminoharnstoffharze (Herstellung aus A + B)

| Lfd. Nr. | Polyaminoamide A | | | | Diisocyanat B | | Aminzahl | Durchbruchs-spannung (V) | Abscheidungs-spannung (V) | Einbrenntemp. (°C) | Schichtdicke (μm) | Pendelhärte n. König (sec.) |
|---|---|---|---|---|---|---|---|---|---|---|---|---|
| | A (1) | % | A (2) | % | Art | % | | | | | | |
| 1 | II a | 55 | I a | 29 | TDI | 16 | 76 | 450 | 300 | 140 | 15 | n. b. |
| 2 | II a + III c | 28<br>34 | I a | 23 | TDI | 15 | 92 | 450 | 300 | 140 | 25 | 40 |
| 3 | II a + III c | 49<br>22 | I a | 15 | TDI | 14 | 61 | 400 | 300 | 140 | 20 | 35 |
| 4 | II a | 55 | I f | 28 | TDI | 17 | 58 | 475 | 300 | 140 | 20 | n. b. |
| 5 | II e | 53 | I f | 28 | TDI | 19 | 108 | 450 | 300 | 140 | 60 | n. b. |
| 6 | II a | 56 | I a + I f | 17<br>12 | TDI | 15 | 70 | 450 | 300 | 140 | 26 | n. b. |
| 7 | II a + III b | 12<br>37 | I g | 33 | TDI | 18 | 125 | 420 | 300 | 140 | 40 | n. b. |

n. b. = nicht durch Pendelhärte exakt bestimmbar, da Oberfläche matt oder strukturiert. Filme sind hart.

Tabelle 3

Amidgruppenhaltige Aminoharnstoffharze — Herstellung aus A (1) oder A (2) und B und C (1)

| Lfd. Nr. | Polyaminoamide A | | | | Diiso-cyanat B | | Amine C (1) | | Aminzahl | Durchbruchs-spannung (V) | Abschei-dungs-spannung (V) | Einbrenn-temperatur (°C) | Schicht-dicke (μm) | Pendelhärte n. König (sec.) |
|---|---|---|---|---|---|---|---|---|---|---|---|---|---|---|
| | A (1) | % | A (2) | % | Art | % | Art | % | | | | | | |
| 1 | III b | 61 | | | TDI | 25 | Diallylamin | 14 | 49 | 150 | 100 | 140 | 18 | 83 |
| 2 | III c | 61 | | | TDI | 25 | Diallylamin | 14 | 72 | 250 | 200 | 140 | 27 | 57 |
| 3 | III d | 61 | | | TDI | 25 | Diallylamin | 14 | 79 | 350 | 300 | 140 | 30 | 110 |
| 4 | | | I b | 51 | TDI | 28 | Diallylamin | 21 | 81 | 380 | 300 | 140 | 60 | n. b. |
| 5 | | | I c | 67 | TDI | 20 | Diallylamin | 13 | 36 | 375 | 300 | 140 | 24 | n. b. |
| 6 | | | III g | 69 | TDI | 21 | Diallylamin | 10 | 89 | 450 | 300 | 140 | 16 | 52 |

n. b. wie Tabelle 2

Tabelle 4

Amidgruppenhaltige Aminoharnstoffharze (Herstellung aus A + B + C (1))

| Lfd. Nr. | Polyaminoamide A | | | | Diiso-cyanat B | | Amine (C 1) | | Zusätze | | Amin-zahl | Durch-bruchs-spannung | Abschei-dungs-spannung | Einbrenn-tempe-ratur (°C) | Schicht-dicke ($\mu m$) | Pendel-härte n. König (sec.) |
|---|---|---|---|---|---|---|---|---|---|---|---|---|---|---|---|---|
| | A (1) | % | A (2) | % | Art | % | Art | % | Art | % | | | | | | |
| 1 | II a | 50 | I a | 20 | TDI | 24 | Allylamin | 6 | | | 57 | 350 | 300 | 140 | 19 | 134 |
| 2 | III b | 35 | I a | 24 | TDI | 28 | Diallylamin | 13 | | | 102 | 280 | 250 | 140 | 38 | 169 |
| 3 | III b | 39 | I a | 16 | TDI | 31 | Diallylamin | 14 | | | 83 | 300 | 250 | 140 | 17 | 178 |
| 4 | III b | 31 | I a | 21 | MDI | 36 | Diallylamin | 12 | | | 91 | 350 | 300 | 140 | 20 | 193 |
| 5 | III b<br>+III f | 24<br>11 | I a<br>I a | 24 | TDI | 28 | Diallylamin | 13 | | | 100 | 350 | 250<br>250<br>250 | 140<br>130<br>120 | 24<br>25<br>25 | 179<br>168<br>164 |
| 6 | II d | 50 | I b | 15 | TDI | 24 | Diallylamin | 11 | | | 73 | 415 | 350 | 140 | 45 | 105 |
| 7 | III b | 45 | I b | 14 | MDI | 31 | Diallylamin | 10 | | | 44 | 450 | 300 | 140 | 20 | 175 |
| 8 | IV | 50 | I b | 15 | TDI | 24 | Diallylamin | 11 | | | 69 | 390 | 300 | 140 | 25 | 155 |
| 9 | III c | 33 | I c | 33 | MDI | 25 | Diallylamin | 10 | | | 68 | 400 | 300 | 140 | 24 | 100 |
| 10 | III b | 35 | I d | 24 | TDI | 28 | Diallylamin | 13 | | | 95 | 260 | 220 | 140 | 35 | 156 |
| 11 | III b | 35 | I e | 24 | TDI | 28 | Diallylamin | 13 | | | 98 | 340 | 260<br>280 | 140<br>120 | 32<br>36 | 174<br>154 |
| 12a) | II a | 48 | I a | 19 | TDI | 23 | Diallylamin | 10 | | | 51 | 330 | 300 | 140 | 30 | 141 |
| b) | | | | | | | | | + S | 3*) | | | 300 | 140 | 28 | 148 |
| c) | | | | | | | | | + S + $Pbac_2 \cdot 3\,H_2O$<br>+ S + $Pbac_2 \cdot 3\,H_2O$ | 3 + 3*)<br>3 + 3*) | | | 300<br>300 | 140<br>120 | 29<br>30 | 164<br>111 |

Fortsetzung

| Lfd. Nr. | Polyaminoamide A A (1) | % | A (2) | % | Diiso-cyanat B Art | % | Amine (C 1) Art | % | Zusätze Art | % | Amin-zahl | Durch-bruchs-spannung | Abschei-dungs-spannung | Einbrenn-tempe-ratur (°C) | Schicht-dicke (μm) | Pendel-härte n. König (sec.) |
|---|---|---|---|---|---|---|---|---|---|---|---|---|---|---|---|---|
| 13a) | III b | 50 | I b | 15 | TDI | 24 | Diallylamin | 11 | | | 73 | 280 | 230 | 140 | 42 | 134 |
| b) | | | | | | | | | + Pigmentpaste 1 (100%ig) | 28,7**) | | 350 | 300 | 140 | 36 | 136 |
| c) | | | | | | | | | + Pigmentpaste 1 (100%ig)<br>+ $Pbac_2 \cdot 3\,H_2O$ | 28,7**)<br>+ 3*) | | 300 | 250 | 140 | 32 | 129 |

Zusätze %
*) bezogen auf Feststoff;
**) Gehalt in Gesamtfeststoff

Tabelle 5

Amidgruppenhaltige Aminoharnstoffharze – Herstellung aus A und B und C (2)

| Ldf. Nr. | Polyaminoamide A | | | | Diisocyanat B | | Amine C (2) | | Aminzahl | Durch-bruchs-spannung (V) | Abschei-dungs-spannung (V) | Einbrenn-temperatur (°C) | Schicht-dicke (µm) | Pendelhärte n. König (sec.) | |
|---|---|---|---|---|---|---|---|---|---|---|---|---|---|---|---|
| | A (1) | % | A (2) | % | Art | % | Art | % | | | | | | | |
| 1 | III e | 53 | I b | 15 | TDI | 22 | Di-n-propylamin | 10 | 71 | 410 | 350 | 140 | 53 | 123 | |
| 2 | III b | 50 | I b | 15 | TDI | 24 | Di-n-propylamin | 11 | 70 | 380 | 350 | 140 | 28 | 134 | |
| 3 | III b | 50 | I b | 16 | TDI | 24 | tert. Butylamin | 10 | 74 | 450 | 300 | 140 | 25 | 118 | |
| 4 | III b | 47 | I b | 14 | TDI | 22 | Di-n-butylamin | 17 | 76 | 325 | 250 | 140 | 32 | 134 | |
| 5 | III b | 47 | I b | 14 | TDI | 22 | Di-i-butylamin | 17 | 76 | 310 | 250 | 140 | 18 | 129 | |
| 6 | III b | 49 | I b | 15 | TDI | 24 | Piperidin | 12 | 66 | 430 | 300 | 140 | 24 | 150 | |
| 7 | III b | 49 | I b | 15 | TDI | 23 | Cyclohexylamin | 13 | 82 | 320 | 250 | 140 | 60 | 129 | *) |
| 8 | III b | 49 | I b | 15 | TDI | 24 | Morpholin | 12 | 76 | 350 | 200 | 140 | 20 | 104 | |
| 9 | III b | 50 | I b | 15 | TDI | 23 | Anilin | 12 | 85 | 300 | 250 | 140 | 20 | 116 | *) |

*) Neutralisationsgrad = 0,6 mMol AcOH/g Feststoff

Tabelle 6

Polyamidgruppenhaltige Aminoharnstoffharze mit Urethangruppierungen — Herstellung aus A und B und C (3) oder C (4)

| Lfd. Nr. | Polyaminoamide A | | | | Diisocyanat B | | Alkohole mit olefinischen oder cycloolefinischen Gruppen C | |
|---|---|---|---|---|---|---|---|---|
| | A (1) | % | A (2) | % | Art | % | Art | % |
| 1 | II a | 44 | I a | 17 | TDI | 29 | Allylalkohol | 10 |
| 2a | II a | 49 | I a | 20 | TDI | 23 | Methallylalkohol | 8 |
| b | | | | | | | Methallylalkohol | |
| 3 | II a | 46 | I a | 19 | TDI | 22 | Hydroxymethylennorbornen (V a) | 13 |
| 4 | II a | 45 | I a | 18 | TDI | 22 | Hydroxydicyclopenten (V b) | 15 |
| 5a | II a | 43 | I a | 17 | TDI | 21 | Dicyclopentenylmonoglykoläther (V c) | 19 |
| b | | | | | | | Dicyclopentenylmonoglykoläther (V c) | |
| 6a | II a | 48 | I a | 19 | TDI | 22 | 3-(Hydroxymethylen-)dihydropyran-3 (V d) | 12 |
| b | | | | | | | 3-(Hydroxymethylen-)dihydropyran-3 (V d) | |

Tabelle 6 (Fortsetzung)

| Lfd. Nr. | Zusätze Art | % | Aminzahl | Durchbruchs-spannung (V) | Abscheidungs-spannung (V) | Einbrenn-temperatur (°C) | Schichtdicke (μm) | Pendelhärte n. König (sec.) | |
|---|---|---|---|---|---|---|---|---|---|
| 1 | | | 31 | 285 | 200 | 140 | 26 | n. b. | hart |
| 2a | | | 51 | 300 | 250 | 140 | 29 | 92 | |
| b | Pigmentpaste 2 | 33**) | | | 200 | 140 | 18 | 120 | |
| 3 | | | 44 | 430 | 350 | 140 | 31 | 118 | |
| 4 | | | 36 | >500 | 200 | 140 | 50 | n. b. | hart |

Fortsetzung

| Lfd. Nr. | Zusätze Art | % | Aminzahl | Durchbruchs-spannung (V) | Abscheidungs-spannung (V) | Einbrenn-temperatur (°C) | Schichtdicke (μm) | Pendelhärte n. König (sec.) |
|---|---|---|---|---|---|---|---|---|
| 5a | | | 39 | >500 | 300 | 140 | 24 | 117 |
| b | S | 3*) | | | 300 | 140 | 23 | 116 |
| 6a | | | 43 | 440 | 300 | 140 | 25 | 127 |
| b | S | 3*) | | | 300 | 140 | 25 | 129 |

Zusätze %
*) auf Feststoff bezogen;
**) Gehalt in Gesamtfeststoff;
n. b. wie Tabelle 2

Tabelle 7

Polyamidgruppenhaltige Aminoharnstoffharze mit Urethangruppierung – Herstellung aus A + B + C (5)

| Lfd. Nr. | Polyaminoamid A | | Diisocyanat B | | gesättigte Alkohole mit ggf. tert. Aminogruppen C | |
|---|---|---|---|---|---|---|
| | A (1) | % | Art | % | Art | % |
| 1 | III a | 32 | MDI | 41 | 1-Glyceryl-dicyclopentenyläther (V e)<br>Polyäthylenglykol 300<br>Dimethyläthanolamin | 11<br>10<br>6 |
| 2 | III a | 40 | MDI | 38 | Dicyclopentenyl-glyceryl-1-bis-glykoläther (V f)<br>Dimethyläthanolamin | 16<br>6 |

Tabelle 7 (Fortsetzung)

| Lfd. Nr. | Zusätze | | Aminzahl | Durchbruchs-spannung (V) | Abscheidungs-spannung (V) | Einbrenn-temperatur (°C) | Schichtdicke (μm) | Pendelhärte n. König (sec.) |
|---|---|---|---|---|---|---|---|---|
| | Art | % | | | | | | |
| 1 | $Co(ac)_2 \cdot 4\,H_2O$ | 2*) | 62 | 250 | 200 | 120 | 15 | 154 |
| 2 | – | | 71 | 300 | 250 | 140 | 15 | 190 |

*) bez. auf Feststoff

**Patentansprüche für die Vertragsstaaten: BE, DE, FR, GB, IT, NL, SE**

1. Selbstvernetzende kataphoretisch abscheidbare amidgruppenhaltige Aminoharnstoffharze mit gegebenenfalls Urethangruppierungen, dadurch gekennzeichnet, daß sie das Reaktionsprodukt von mindestens

(A) einem Polyaminoamid, das aus
  (1) einer oder mehreren überwiegend höheren Fettsäure(n) und einem oder mehreren Alkylen- bzw. Polyalkylen-polyaminen und/oder
  (2) Dimerfettsäuren, gegebenenfalls im Gemisch mit vorwiegend höheren, im wesentlichen ungesättigten Fettsäuren, und einem oder mehreren Alkylen- bzw. Polylalkylenpolyaminen hergestellt worden ist und zusätzlich teilweise unter Wasserabspaltung entstandene cyclische Amidingruppierungen und gegebenenfalls als Ketimin blockierte Aminogruppen enthält,

(B) einem Diisocyanat und gegebenenfalls von

(C) (1) einem primären und/oder sekundären Allyl- bzw. Methallylamin und/oder
  (2) einem oder mehreren gesättigten primären und/oder sekundären aliphatischen, cycloaliphatischen, heterocyclischen oder aromatischen Aminen und/oder
  (3) einem Allyl- bzw. Methallylalkohol und/oder
  (4) einem oder mehreren cyclischen oder polycyclischen Alkoholen, die in ihren cyclischen oder polycyclischen Ringsystemen olefinisch ungesättigt sind, und/oder
  (5) einem Monoalkohol mit einem tert. N-Atom und/oder Diol mit gegebenenfalls einem tertiären N-Atom

darstellen und mit einer Säure unter Ausbildung von kationischen Gruppen in Wasser dispergierbar gemacht worden sind.

2. Kataphoretische Harze nach Anspruch 1, dadurch gekennzeichnet, daß die Komponente A (1) ein Reaktionsprodukt aus Ricinenfettsäuren oder Ricinenfettsäuren und Essigsäure oder Stearinsäure mit einem oder mehreren Alkylen- bzw. Polyalkylenpolyaminen der Formeln

$$H_2N—(CH_2—CH_2—NH)_n—CH_2—CH_2—NH_2$$

worin n = 0 und/oder 1 und/oder 2 und/oder 3 bedeuten, oder

$$H_2N—CH_2—CH_2—CH_2—NH—R—NH—CH_2—CH_2—CH_2—NH_2$$

worin R = $-CH_2-CH_2-$ bedeutet, ist und das Reaktionsprodukt zusätzlich teilweise unter Wasserabspaltung entstandene Imidazolin- und/oder Tetrahydropyrimidinringe und gegebenenfalls Ketimingruppen enthält.

3. Kataphoretische Harze nach den Ansprüchen 1 bis 2, dadurch gekennzeichnet, daß die Komponente A (2) ein Reaktionsprodukt aus Dimerfettsäuren und gegebenenfalls Tallölfettsäuren oder Ricinenfettsäuren mit einem oder mehreren Polyalkylen-polyaminen der Formel

$$H_2N—(CH_2—CH_2—NH)_n—CH_2—CH_2—NH_2$$

worin n = 0 und 1–3 oder 1 und/oder 2 und/oder 3 bedeuten, ist und das Reaktionsprodukt teilweise unter Wasserabspaltung entstandene Imidazolinringe und gegebenenfalls Ketimingruppen enthält.

4. Kataphoretische Harze nach den Ansprüchen 1 bis 3, dadurch gekennzeichnet, daß die Komponente (B) ein Gemisch aus 2,4- und 2,6-Diisocyanato-toluol und/oder 4,4'-Diisocyanato-diphenylmethan ist.

5. Kataphoretische Harze nach den Ansprüchen 1 bis 4, dadurch gekennzeichnet, daß der cyclische oder polycyclische Alkohol ein Norborneyl-, Cyclohexenyl-, Dihydropyranyl-, Cyclopentenyl- oder Dicyclopentenyl-Derivat ist.

6. Kataphoretische Harze nach den Ansprüchen 1 bis 5, dadurch gekennzeichnet, daß im Harz der Gehalt der Polyaminoamidkomponente (A) zwischen 30–80 Gew.-%, der Gehalt der Diiocyanatkomponente (B) zwischen 10–45 Gew.-% und bei Verwendung der Komponente (C) deren Gehalt bis zu 40 Gew.-% beträgt.

7. Kataphoretische Harze nach den Ansprüchen 1 bis 6, dadurch gekennzeichnet, daß der basische N-Gehalt des Harzes 0,5–2,5 Äquivalente/1000g Harz und der Neutralisationsgrad des mit Säure umgesetzten basischen Harzes 0,1–1 Äquivalente/1000 g Harz beträgt.

8. Verfahren zur Beschichtung eines elektrisch leitenden und als Katiode dienenden Substrats mit einem in Wasser dispergierbaren kataphoretischen Harzes, indem man elektrischen Strom durch das zwischen Anode und Kathode in Wasser dispergierbare kataphoretische Harze hindurchleitet, dadurch

gekennzeichnet, daß dieses die Kennzeichen eines oder mehrerer der Ansprüche 1 bis 7 aufweist.

9. Verfahren nach Anspruch 8, dadurch gekennzeichnet, daß das in Wasser dispergierte kataphoretische Harz Schwefel und/oder Sikkative auf der Basis von Naththenaten, Oleaten oder Acetaten von Schwermetallverbindungen und/oder Pigmente auf der Basis von Schwermetallverbindungen und/oder Füllstoffe enthält.

**Patentansprüche für den Vertragsstaat: AT**

1. Verfahren zur Herstellung von selbstvernetzenden kataphoretisch abscheidbaren amidgruppenhaltigen Aminoharnstoffharzen mit gegebenenfalls Urethangruppierungen, dadurch gekennzeichnet, daß diese das Reaktionsprodukt von mindestens

(A) einem Polyaminoamid, das aus
- (1) einer oder mehreren überwiegend höheren Fettsäure(n) und einem oder mehreren Alkylen- bzw. Polyalkylen-polyaminen und/oder
- (2) Dimerfettsäuren, gegebenenfalls im Gemisch mit vorwiegend höheren, im wesentlichen ungesättigten Fettsäuren, und einem oder mehreren Alkylen- bzw. Polylalkylenpolyaminen hergestellt worden ist und zusätzlich teilweise unter Wasserabspaltung entstandene cyclische Amidingruppierungen und gegebenenfalls als Ketimin blockierte Aminogruppen enthält,

(B) einem Diisocyanat und gegebenenfalls von

(C)
- (1) einem primären und/oder sekundären Allyl- bzw. Methallylamin und/oder
- (2) einem oder mehreren gesättigten primären und/oder sekundären aliphatischen, cycloaliphatischen, heterocyclischen oder aromatischen Aminen und/oder
- (3) einem Allyl- bzw. Methallylalkohol und/oder
- (4) einem oder mehreren cyclischen oder polycyclischen Alkoholen, die in ihren cyclischen oder polycyclischen Ringsystemen olefinisch ungesättigt sind, und/oder
- (5) einem Monoalkohol mit einem tert. N-Atom und/oder Diol mit gegebenenfalls einem tertiären N-Atom

darstellen und mit einer Säure unter Ausbildung von kationischen Gruppen in Wasser dispergierbar gemacht worden sind.

2. Verfahren nach Anspruch 1, dadurch gekennzeichnet, daß die Komponente A (1) ein Reaktionsprodukt aus Ricinenfettsäuren oder Ricinenfettsäuren und Essigsäure oder Stearinsäure mit einem oder mehreren Alkylen- bzw. Polyalkylenpolyaminen der Formeln

$$H_2N-(CH_2-CH_2-NH)_n-CH_2-CH_2-NH_2$$

worin n = 0 und/oder 1 und/oder 2 und/oder 3 bedeuten, oder

$$H_2N-CH_2-CH_2-CH_2-NH-R-NH-CH_2-CH_2-CH_2-NH_2$$

worin R = $-CH_2-CH_2-$ bedeutet, ist und das Reaktionsprodukt zusätzlich teilweise unter Wasserabspaltung entstandene Imidazolin- und/oder Tetrahydropyrimidinringe und gegebenenfalls Ketimingruppen enthält.

3. Verfahren nach den Ansprüchen 1 bis 2, dadurch gekennzeichnet, daß die Komponente A (2) ein Reaktionsprodukt aus Dimerfettsäuren und gegebenenfalls Tallölfettsäuren oder Ricinenfettsäuren mit einem oder mehreren Polylalkylen-polyaminen der Formel

$$H_2N-(CH_2-CH_2-NH)_n-CH_2-CH_2-NH_2$$

worin n = 0 und 1–3 oder 1 und/oder 2 und/oder 3 bedeuten, ist und das Reaktionsprodukt teilweise unter Wasserabspaltung entstandene Imidazolinringe und gegebenenfalls Ketimingruppen enthält.

4. Verfahren nach den Ansprüchen 1 bis 3, dadurch gekennzeichnet, daß die Komponente (B) ein Gemisch aus 2,4- und 2,6-Diisocyanato-toluol und/oder 4,4'-Diisocyanato-diphenylmethan ist.

5. Verfahren nach den Ansprüchen 1 bis 4, dadurch gekennzeichnet, daß der cyclische oder polycyclische Alkohol ein Norborneyl-, Cyclohexenyl-, Dihydropyranyl-, Cyclopentenyl- oder Dicyclopentenyl-Derivat ist.

6. Verfahren nach den Ansprüchen 1 bis 5, dadurch gekennzeichnet, daß im Harz der Gehalt der Polyaminoamidkomponente (A) zwischen 30–80 Gew.-%, der Gehalt der Diisocyanatkomponente (B) zwischen 10–45 Gew.-% und bei Verwendung der Komponente (C) deren Gehalt bis zu 40 Gew.-% beträgt.

7. Verfahren nach den Ansprüchen 1 bis 6, dadurch gekennzeichnet, daß der basische N-Gehalt des Harzes 0,5–2,5 Äquivalente/1000 g Harz und der Neutralisationsgrad des mit Säure umgesetzten basischen Harzes 0,1–1 Äquivalente/1000 g Harz beträgt.

8. Verfahren zur Beschichtung eines elektrisch leitenden und als Kathode dienenden Substrats mit einem in Wasser dispergierbaren kataphoretischen Harzes, indem man elektrischen Strom durch das zwischen Anode und Kathode in Wasser dispergierbare kataphoretische Harze hindurchleitet, dadurch gekennzeichnet, daß dieses die Kennzeichen eines oder mehrerer der Ansprüche 1 bis 7 aufweist.

9. Verfahren nach Anspruch 8, dadurch gekennzeichnet, daß das in Wasser dispergierte kataphoretische Harz Schwefel und/oder Sikkative auf der Basis von Naththenaten, Oleaten oder Acetaten von Schwermetallverbindungen und/oder Pigmente auf der Basis von Schwermetallverbindungen und/oder Füllstoffe enthält.

**Claims for the Contracting States: BE, DE, FR, GB, IT, NL, SE**

1. Self-crosslinking electrophoretically depositable aminourea resins containing amide groups and, optionally, urethane groups, characterized in that they are the reaction product of at least

(A) a polyaminoamide which has been produced from
- (1) one or more predominantly higher fatty acid(s) and one or more alkylene or polyalkylene polyamines and/or
- (2) dimerized fatty acids, optionally in admixture with predominantly higher, substantially unsaturated fatty acids and one or more akylene or polyalkylene polyamines and which additionally contains cyclic amidine groups formed partly with elimination of water and amino groups optionally blocked as ketimine,

(B) a diisocyanate and, optionally,

(C)
- (1) a primary and/or secondary allyl or methallylamine and/or
- (2) one or more saturated primary and/or secondary aliphatic, cycloaliphatic, heterocyclic or aromatic amines and/or
- (3) an allyl or methallyl alcohol and/or
- (4) one or more cyclic or polycyclic alcohols which are olefinically unsaturated in their cyclic or polycyclic ring systems and/or
- (5) a monoalcohol containing a tert. N-atom and/or diol optionally containing a tert. N-atom

and have been made dispersible in water with an acid to form cationic groups.

2. Electrophoretic resins as claimed in Claim 1, characterized in that component A (1) is a reaction product of ricinene fatty acids or ricinene fatty acids and acetic acid or stearic acid with one or more alkylene or polyalkylene polyamines corresponding to the following formulae

$$H_2N—(CH_2—CH_2—NH)_n—CH_2—CH_2—NH_2$$

in which n = 0 and/or 1 and/or 2 and/or 3, or

$$H_2N—CH_2—CH_2—CH_2—NH—R—NH—CH_2—CH_2—CH_2—NH_2$$

in which $R = -CH_2-CH_2-$, and in that the reaction product additionally contains imidazoline and/or tetrahydropyrimidine rings formed partly with elimination of water and, optionally, ketimine groups.

3. Electrophoretic resins as claimed in Claims 1 and 2, characterized in that component A (2) is a reaction product of dimerized fatty acids and, optionally, tall oil fatty acids or ricinene fatty acids with one or more polyalkylene polyamines corresponding to the following formula

$$H_2N—(CH_2—CH_2—NH)_n—CH_2—CH_2—NH_2$$

in which n = 0 and 1–3 or 1 and/or 2 and/or 3, and in that the reaction product contains imidazoline rings formed partly with elimination of water and, optionally, ketimine groups.

4. Electrophoretic resins as claimed in Claims 1 to 3, characterized in that component (B) is a mixture of 2,4- and 2,6-diisocyanatotoluene and/or 4,4'-diisocyanatodiphenylmethane.

5. Electrophoretic resins as claimed in Claims 1 to 4, characterized in that the cyclic or polycyclic alcohol is a norborneyl, cyclohexenyl, dihydropyranyl, cyclopentenyl or dicyclopentenyl derivative.

6. Electrophoretic resins as claimed in Claims 1 to 5, characterized in that the resin contains from 30 to 80% by weight of the polyaminoamide component (A), from 10 to 45% by weight of the diisocyanate component (B) and up to 40% by weight of component (C) when component (C) is used.

7. Electrophoretic resins as claimed in Claims 1 to 6, characterized in that the basic N-content of the

resin amounts to between 0.5 and 2.5 equivalents/1000 g of resin and the degree of neutralization of the basic resin reacted with acid to between 0.1 and 1 equivalent/1000 g of resin.

8. A process for coating an electrically conductive substrate acting as cathode with a water-dispersible electrophoretic resin by passing electric current through the electrophoretic resin dispersible in water between the anode and cathode, characterized in that the resin has the characteristics of one or more of Claims 1 to 7.

9. A process as claimed in Claim 8, characterized in that the electrophoretic resin dispersed in water contains sulfur and/or siccatives based on naphthenates, oleates or acetates of heavy-metal compounds and/or pigments based on heavy-metal compounds and/or fillers.

**Claims for the Contracting State: AT**

1. A process for the production of self-crosslinking electrophoretically depositable aminourea resins containing amide groups and, optionally, urethane groups, characterized in that the resins are the reaction product of at least

(A) a polyaminoamide which has been produced from
- (1) one or more predominantly higher fatty acid(s) and one or more alkylene or polyalkylene polyamines and/or
- (2) dimerized fatty acids, optionally in admixture with predominantly higher, substantially unsaturated fatty acids and one or more alkylene or polyalkylene polyamines and which additionally contains cyclic amidine groups formed partly with elimination of water and amino groups optionally blocked as ketimine,

(b) a diisocyanate and, optionally,

(C)
- (1) a primary and/or secondary allyl or methallylamine and/or
- (2) one or more saturated primary and/or secondary aliphatic, cycloaliphatic, heterocyclic or aromatic amines and/or
- (3) an allyl or methallyl alcohol and/or
- (4) one or more cyclic or polycyclic alcohols which are olefinically unsaturated in their cyclic or polycyclic ring systems and/or
- (5) a monoalcohol containing a tert. N-atom and/or diol optionally containing a tert. N-atom

and have been made dispersible in water with an acid to form cationic groups.

2. A process as claimed in Claim 1, characterized in that component A (1) is a reaction product of ricinene fatty acids or ricinene fatty acids and acetic acid or stearic acid with one or more alkylene or polyalkylene polyamines corresponding to the following formulae

$$H_2N-(CH_2-CH_2-NH)_n-CH_2-CH_2-NH_2$$

in which n = 0 and/or 1 and/or 2 and/or 3, or

$$H_2N-CH_2-CH_2-CH_2-NH-R-NH-CH_2-CH_2-CH_2-NH_2$$

in which $R = -CH_2-CH_2-$, and in that the reaction product additonally contains imidazoline and/or tetrahydropyrimidine rings formed partly with elimintion of water and, optionally, ketimine groups.

3. A process as claimed in Claims 1 and 2, characterized in that component A (2) is a reaction product of dimerized fatty acids and, optionally, tall oil fatty acids or ricinene fatty acids with one or more polyalkylene polymaines corresponding to the following formula

$$H_2N-(CH_2-CH_2-NH)_n-CH_2-CH_2-NH_2$$

in which n = 0 and 1–3 or 1 and/or 2 and/or 3, and in that the reaction product contains imidazoline rings formed partly with elimination of water and, optionally, ketimine groups.

4. A process as claimed in Claims 1 to 3, characterized in that component (B) is a mixture of 2,4- and 2,6-diisocyanatotoluene and/or 4,4'-diisocyanatodiphenyl methane.

5. A process as claimed in Claims 1 to 4, characterized in that the cyclic or polycyclic alcohol is a norborneyl, cyclohexenyl, dihydropyranyl, cyclopentenyl or dicyclopentenyl derivative.

6. A process as claimed in Claims 1 to 5, characterized in that the resin contains from 30 to 80% by weight of the polyaminoamide component (A), from 10 to 45% by weight of the diisocyanate component (B) and up to 40% by weight of component (C) when component (C) is used.

7. A process as claimed in Claims 1 to 6, characterized in that the basic N-content of the resin amounts to between 0.5 and 2.5 equivalents/1000 g of resin and the degree of neutralization of the

basic resin reacted with acid to between 0.1 and 1 equivalent/1000 g of resin.

8. A process for coating an electrically conductive substrate acting as cathode with a water-dispersible electrophoretic resin by passing electric current through the electrophoretic resin dispersible in water between the anode and the cathode, characterized in that the resin has the characteristics of one or more of Claims 1 to 7.

9. A process as claimed in Claim 8, characterized in that the electrophoretic resin dispersed in water contains sulfur and/or siccatives based on naphthenates, oleates or acetates of heavy-metal compounds and/or pigments based on heavy-metal compounds and/or fillers.

**Revendications pour les Etats contractants: BE, DE, FR, GB, IT, NL, SE**

1. Résines d'amino-urée auto-réticulantes aptes à se déposer par cataphorèse contenant des groupes amido et éventuellement des groupements uréthane, caractérisées par le fait qu'elles représentent le produit de réaction d'au moins

(A) un polyamino-amide qui est préparé à partir
    (1) d'un ou de plusieurs acide(s) gras essentiellement supérieur(s) et d'une ou de plusieurs alkylène- ou polyalkylène-polyamines et/ou
    (2) d'acides gras dimères, éventuellement en mélange avec des acides gras généralement supérieurs, essentiellement non saturés, et d'une ou de plusieurs alkylène- ou polyalkylène-polyamines, et qui contient en outre en partie des groupements amidino cycliques obtenus par déshydratation, et éventuellement des groupes amino bloqués sous la forme cétimine,

(B) d'un diisocyanate et éventuellement de

(C) (1) une allyl- ou méthallylamine primaire et/ou secondaire et/ou
    (2) une ou plusieurs amines aliphatiques, cycloaliphatiques, hétérocycliques ou aromatiques primaires et/ou secondaires, saturées, et/ou
    (3) un alcool allylique ou méthallylique et/ou
    (4) un ou plusieurs alcools cycliques ou polycycliques à insaturation oléfinique dans leur système de noyau cyclique ou polycyclique et/ou
    (5) un monoalcool avec un atome d'azote tertiaire et/ou un diol avec éventuellement un atome d'azote tertiaire

et qu'elles sont rendues aptes à se disperser dans l'eau avec un acide par formation de groupes cationiques.

2. Résines pour cataphorèse selon la revendication 1, caractérisées par le fait que le composant A (1) est un produit de réaction d'acides gras riciniques ou d'acides gras riciniques et d'acide acétique ou d'acide stéarique avec une ou plusieurs alkylène- ou polyalkylène-polyamines de formules

$$H_2N—(CH_2—CH_2—NH)_n—CH_2—CH_2—NH_2$$

dans laquelle n est égal à 0 et/ou représente 1 et/ou 2 et/ou 3, ou

$$H_2N—CH_2—CH_2—CH_2—NH—R—NH—CH_2—CH_2—CH_2—NH_2$$

dans laquelle R représente $-CH_2-CH_2-$, et que le produit de réaction contient en outre en partie des noyaux imidazoline et/ou tétra-hydropyrimidine obtenus par déshydratation et éventuellement des groupes cétimine.

3. Résines pour cataphorèse selon les revendications 1 et 2, caractérisées par le fait que le composant A (2) est un produit de réaction d'acides gras dimères et éventuellement d'acides gras de tallöl ou d'acides gras riciniques avec une ou plusieurs polyalkylène-polyamines de formule

$$H_2N—(CH_2—CH_2—NH)_n—CH_2—CH_2—NH_2$$

dans laquelle n = 0 et 1—3 ou représente 1 et/ou 2 et/ou 3, et que le produit de réaction contient en partie des noyaux imidazoline obtenus par déshydratation et éventuellement des groupes cétimine.

4. Résines pour cataphorèse selon les revendications 1 à 3, caractérisées par le fait que le composant (B) est un mélange de 2,4- et 2,6-di-isocyanato-toluène et/ou de 4,4'-di-isocyanato-diphénylméthane.

5. Résines pour cataphorèse selon les revendications 1 à 4, caractérisées par le fait que l'alcool cyclique ou polycyclique est un dérivé norbonéyle, cyclohexényle, dihydropyranyle, cyclopentényle ou dicyclopentényle.

6. Résines pour cataphorèse selon les revendications 1 à 5, caractérisées par le fait que dans la résine la teneur en composant (A) polyamino-amide est comprise entre 30 et 80% en poids, la teneur en

composant di-isocyanate (B) est comprise entre 10 et 45% en poids et, dans l'utilisation du composant (C), sa teneur va jusqu'à 40% en poids.

7. Résines pour cataphorèse selon les revendications 1 à 6, caractérisées par le fait que la teneur en azote basique de la résine s'élève à 0,5—2,5 équivalents/1000 g de résine, et que le degré de neutralisation de la résine basique traitée avec de l'acides s'élève à 0,1—1 équivalent/1000 g de résine.

8. Procédé pour le revêtement d'un substrat conducteur de l'électricité et servant de cathode avec une résine pour cataphorèse pouvant se disperser dans l'eau, dans lequel on fait passer un courant électrique à travers la résine pour cataphorèse pouvant se disperser dans de l'eau entre l'anode et la cathode, caractérisé par le fait que cette résine présente les caractéristiques d'une ou de plusieurs des revendications 1 à 7.

9. Procédé selon la revendication 8, caractérisé par le fait que la résine pour cataphorèse dispersée dans de l'eau contient du soufre et/ou de siccatifs à base de naphténates, d'oléates ou d'acétates de composés de métaux lourds et/ou des pigments à base de composés de métaux lourds et/ou des charges.

**Revendications pour L'Etat contractant: AT**

1. Procédé pour la préparation de résines d'amino-urée auto-réticulantes, aptes à se déposer par cataphorèse, contenant des groupes amido et éventuellement des groupements uréthane, caractérisé par le fait que ces résines représentent le produit de réaction d'au moins

(A) un polyamino-amide qui est préparé à partir
- (1) d'un ou de plusieurs acide(s) gras essentiellement supérieur(s) et d'une ou de plusieurs alkylène- ou polyalkylène-polyamines et/ou
- (2) d'acides gras dimères, éventuellement en mélange avec des acides gras généralement supérieurs, essentiellement non saturés, et d'une ou de plusieurs alkylène- ou polyalkylène-polyamines, et qui contient en outre en partie des groupements amidino cycliques obtenus par déshydratation, et éventuellement des groupes amino bloqués sous la forme cétimine,

(B) un di-isocyanate et éventuellement de

(C)
- (1) une allyl- ou méthallylamine primaire et/ou secondaire et/ou
- (2) une ou plusieurs amines aliphatiques, cycloaliphatiques, hétérocycliques ou aromatiques primaires et/ou secondaires saturées, et/ou
- (3) un alcool allylique ou méthallylique et/ou
- (4) un ou plusieurs alcools cycliques ou polycycliques à insaturation oléfinique dans leur système de noyau cyclique ou polycyclique, et/ou
- (5) un monoalcool avec un atome d'azote tertiaire et/ou un diol avec éventuellement un atome d'azote tertiaire

et qu'elles sont rendues aptes à se disperser dans l'eau avec un acide par formation de groupes cationiques.

2. Procédé selon la revendication 1, caractérisé par le fait que le composant A (1) est un produit de réaction d'acides gras riciniques ou d'acides gras riciniques et d'acide acétique ou d'acide stéarique avec une ou plusieurs alkylène- ou polyalkylène-polyamines de formules

$$H_2N—(CH_2—CH_2—NH)_n—CH_2—CH_2—NH_2$$

dans laquelle n est égal à 0 et/ou représente 1 et/ou 2 et/ou 3, ou

$$H_2N—CH_2—CH_2—CH_2—NH—R—NH—CH_2—CH_2—CH_2—NH_2$$

dans laquelle R représente $-CH_2-CH_2-$, et que le produit de réaction contient en outre en partie des noyaux imidazoline et/ou tétra-hydropyrimidine obtenus par déshydratation et éventuellement des groupes cétimene.

3. Procédé selon les revendications 1 et 2, caractérisé par le fait que le composant A (2) est un produit de réaction d'acides gras dimères et éventuellement d'acides gras de tallöl ou d'acides gras riciniques avec une ou plusieurs polyalkylène-polyamines de formule

$$H_2N—(CH_2—CH_2—NH)_n—CH_2—CH_2—NH_2$$

dans laquelle n = 0 et 1—3 ou représente 1 et/ou 2 et/ou 3, et que le produit de réaction contient en partie des noyaux imidazoline obtenus par déshydratation et éventuellement des groupes cétimine.

4. Procédé selon les revendications 1 à 3, caractérisé par le fait que le composant (B) est un mélange

de 2,4- et de 2,6-di-isocyanato-toluène et/ou de 4,4'-di-isocyanato-diphénylméthane.

5. Procédé selon les revendications 1 à 4, caractérisé par le fait que l'alcool cyclique ou polycyclique est un dérivé norbonéyle, cyclohexényle, dihydropyranyle, cyclopentényle ou dicyclopentényle.

6. Procédé selon les revendications 1 à 5, caractérisé par le fait que dans la résine la teneur en composant (A) polyamino-amide est comprise entre 30 et 80% en poids, la teneur en composant di-isocyanate (B) est comprise entre 10 et 45% en poids et, dans l'utilisation du composant (C), sa teneur va jusqu'à 40% en poids.

7. Procédé selon les revendications 1 à 6, caractérisé par le fait que la teneur en azote basique de la résine s'élève à 0,5—2,5 équivalents/1000 g de résine, et que le degré de neutralisation de la résine basique traitée avec de l'acide s'élève à 0,1—1 équivalent/1000 g de résine.

8. Procédé pour le revêtement d'un substrat conducteur de l'électricité et servant de cathode avec une résine pour cataphorèse pouvant se disperser dans l'eau, dans lequel on fait passer un courant électrique à travers la résine pour cataphorèse pouvant se disperser dans de l'eau entre l'anode et la cathode, caractérisé par le fait que celle-ci présente les caractéristiques d'une ou de plusieurs des revendications 1 à 7.

9. Procédé selon la revendication 8, caractérisé par le fait que la résine pour cataphorèse dispersée dans de l'eau contient du soufre et/ou des siccatifs à base de naphténates, d'oléates ou d'acétates de composés de métaux lourds et/ou des pigments à base de composés de métaux lourds et/ou des charges.